# EUROPÄISCHE PATENTSCHRIFT

(11) **EP 2 848 426 B1**
(45) Veröffentlichungstag und Bekanntmachung des Hinweises auf die Patenterteilung: **15.04.2020**
(21) Anmeldenummer: 14180925.1
(22) Anmeldetag: 14.08.2014
(51) Int. Cl.: B60B 3/02, B60B 5/02, B60B 25/04, B60B 25/08, B60B 25/16, B60B 3/00

(54) **Radnabe, insbesondere Flugzeugradnabe**
Wheel hub, in particular aircraft wheel hub
Moyeu de roue, en particulier moyeu de roue d'avion

(30) Priorität: 09.09.2013 DE 102013217919
(43) Veröffentlichungstag der Anmeldung: 18.03.2015
(73) Patentinhaber: Röder Präzision GmbH, 63329 Egelsbach (DE); Fraunhofer-Gesellschaft zur Förderung der angewandten Forschung e.V., 80686 München (DE)
(72) Erfinder: Büter, Andreas, 73230 Kirchheim unter Teck (DE); Bormann, Erik, 64293 Darmstadt (DE); Becker, Paul, 64331 Weiterstadt (DE); Kupresanin, Branko, 63329 Egelsbach (DE)
(74) Vertreter: Keil & Schaafhausen Patentanwälte PartGmbB

(56) Entgegenhaltungen:
- EP-A1- 2 576 243
- DE-A1- 4 129 733
- DE-B3-102012 001 881
- DE-B3-102012 103 004
- GB-A- 1 302 225
- US-A- 3 790 220

## Beschreibung

Die Erfindung betrifft eine Radnabe, insbesondere Flugzeugradnabe, nach dem Oberbegriff des Anspruchs 1.

Eine Radnabe bildet zusammen mit einem Reifen ein Rad, auf dem Fahrzeuge oder Flugzeuge, solange sie am Boden sind, rollen können. Ein Rad gehört zu den ungefederten Massen am Fahrzeug und sollte daher eine möglichst geringe Masse aufweisen. Bei einem Flugzeug ist die geringe Masse von besonderer Bedeutung, weil das Rad im Flugzeug mittransportiert werden muss und somit das Leergewicht des Flugzeugs erhöht.

Während man bei Fahrzeugen eine Felge vielfach aus Stahl bildet, verwendet man bei einer Flugzeugradnabe überwiegend ein Leichtmetall, wie Aluminium. Die Radnabe ist hierbei in axialer Richtung zweigeteilt, so dass man zur Montage des Reifens die Radnabe auseinandernehmen, von beiden axialen Seiten an den Reifen ansetzen und danach wieder miteinander verbinden kann. Die Verbindung erfolgt vielfach unter Verwendung von mehreren Schraubbolzen oder Schrauben-Mutter-Verbindungen, die in Umfangsrichtung gleichmäßig verteilt sind. Die Montage eines derartigen Flugzeugrades wird dadurch relativ aufwändig, was mit erhöhten Kosten verbunden ist.

Eine Radnabe der oben genannten Art ist beispielsweise aus DE 10 2012 103 004 B3 bekannt. Die dortige Radnabe 1 umfasst eine Felge, die eine Umfangsfläche aufweist. Jeweils ein Felgenhorn ist an den axialen Enden der Felge angeordnet, wobei die Felge einen faserverstärkten Kunststoff als Hauptkomponente aufweist. Eines der Felgenhörner ist lösbar mit der Felge verbunden. Mindestens ein Felgenhorn ist axial von außen auf die Umfangsfläche aufgeschoben.

Aus DE 41 29 733 A1 ist eine Radnabe bekannt, die aus einem Harz hergestellt ist. Die Radnabe umfasst zwei oder mehr Teile, die durch Schraubverbindungen miteinander verbunden sind. So können beispielsweise die Hörner auf die zentralen Radnabenteile aufgeschraubt werden.

Durch WO 2011/151644 A1 ist eine Doppelradnabe für ein Fahrzeug bekannt. Die Doppelradnabe weist Felgenhörner auf, die axial aufgeschoben werden können. Zwei oder mehr Befestigungsringe verhindern eine Bewegung des Felgenhorns nach axial außen, wenn der Reifen aufgesetzt ist. Aus GB 1 302 225 A ist eine weitere Radnabe bekannt. Die Radnabe umfasst eine durch die Nabe ausgebildete Ringrippe, die Bohrungen für Metalllagerkugeln aufweist.

DE 10 2012 001 881 B3 zeigt eine Hohlwelle für einen Nabenkörper aus faserverstärktem Kunststoff. Ein Flansch an zumindest einem Ende der Hohlwelle weist Ösen auf, die die Aufnahme von Speichen ermöglichen.

Der Erfindung liegt die Aufgabe zugrunde, eine Radnabe anzugeben, die wenig Kosten verursacht.

Diese Aufgabe wird durch eine Radnabe mit den Merkmalen des Anspruchs 1 gelöst.

Eine derartige Radnabe hat eine Reihe von Vorteilen. Da die Felge im Wesentlichen aus einem faserverstärkten Kunststoff, insbesondere einem kohlefaserverstärkten Kunststoff, besteht, kann man sie mit einer relativ geringen Masse ausbilden. Die Masse kann kleiner gehalten werden als beispielsweise bei Aluminium als Hauptkomponente. Da die beiden Felgenhörner lösbar mit der Felge verbunden sind, kann die Felge an ihrem Außenumfang relativ einfach ausgebildet sein. Im Grunde reicht es aus, die Umfangsfläche der Felge als Zylindermantelfläche auszubilden, wobei unter Umständen einige wenige Modifikationen der Zylindermantelfläche erforderlich sind, um die Felgenhörner lösbar mit der Felge verbinden zu können. Die einfache Form der Umfangsfläche erleichtert und vereinfacht die Herstellung der Radnabe, so dass die Kosten klein gehalten werden können.

Da beide Felgenhörner lösbar mit der Felge verbunden sind, ist es möglich, bei der Beschädigung eines Felgenhornes lediglich dieses Felgenhorn auszutauschen, während man die übrigen Teile der Radnabe weiterverwenden kann. Dies hält die Kosten für die Reparatur und Instandhaltung niedrig. Da man die Radnabe nicht mehr komplett demontieren muss, um einen Reifen montieren zu können, sondern es lediglich erforderlich ist, eines der Felgenhörner von der Felge zu lösen, werden die Montagezeiten und damit auch die Montagekosten klein gehalten. Insgesamt ergeben sich daher sowohl bei der Herstellung als auch beim Unterhalt und der Wartung der Radnabe erhebliche Kostenvorteile.

Außerdem ist mindestens ein Felgenhorn axial von außen auf die Umfangsfläche aufgeschoben und durch ein Verschlusselement gegen eine Bewegung axial nach außen gesichert. Eine Sicherung axial nach außen reicht aus, wenn der Reifen montiert und unter Druck gesetzt worden ist. In diesem Fall wird eine Bewegung des Felgenhorns axial nach innen durch den Reifen verhindert. Der Druck im Reifen hingegen drückt das Felgenhorn axial nach außen gegen das Verschlusselement. Damit wird eine relativ einfache Montage möglich.

Weiterhin bildet das Verschlusselement eine Verdrehsicherung zwischen der Felge und dem Felgenhorn. Wenn das Felgenhorn verdrehsicher auf der Felge sitzt, ist eine erhöhte Sicherheit dagegen gegeben, dass sich der Reifen auf der Felge dreht. Damit können insbesondere Bremskräfte von der Felge zuverlässig auf den Reifen übertragen werden.

Vorzugsweise weist mindestens ein Felgenhorn einen faserverstärkten Kunststoff als Hauptkomponente auf. Auch hier kann man einen kohlefaserverstärkten Kunststoff verwenden. Wenn man das Felgenhorn aus einem faserverstärkten Kunststoff ausbildet, dann kann man die Verstärkungsfasern in Umfangsrichtung des Felgenhornes führen, so dass das Felgenhorn in radialer Richtung eine gute Maßhaltigkeit aufweist. Auch die Felge selbst kann mit an der Umfangsfläche mit in Umfangsrichtung verstärkten Verstärkungsfasern ausgebildet sein, so dass sich eine entsprechend gute Maßhaltigkeit ergibt. Man kann dann die Felge und das Felgenhorn mit hoher Genauigkeit aneinander anpassen.

Vorzugsweise ist das Felgenhorn mit einer Laufschutzschicht versehen. Die Laufschutzschicht kann beispielsweise durch Schutzlagen aus Aramid- oder Para-Aramid-Fasern gebildet sein. Mit einer derartigen Laufschutzschicht bekommt die Radnabe Notlaufeigenschaften, d.h. bei einem Flugzeug ist ein Rollen auch dann möglich, wenn der Reifen beschädigt ist oder fehlt (Roll-on-Rim).

Das Verschlusselement steht formschlüssig mit der Felge in Eingriff. Ein Formschluss ist eine einfache Möglichkeit, um die notwendige Fixierung des Verschlusselements an der Felge so zu bewirken, dass das Verschlusselement das Felgenhorn in axialer Richtung und gegebenenfalls in Umfangsrichtung sicher auf der Umfangsfläche festhalten kann.

Hierbei ist bevorzugt, dass der Klemmring in eine Nut an der Felge eingreift und das Felgenhorn eine auf den Klemmring wirkende Druckfläche aufweist und den Klemmring mit einer in die Nut hineinwirkenden Kraftkomponente belastet. Zur Montage wird also zunächst das Felgenhorn axial auf die Umfangsfläche der Felge aufgeschoben. Danach wird der Klemmring, der in Umfangsrichtung durchaus auch aus mehreren Teilen gebildet sind kann, auf die Felge aufgesetzt und greift in die Nut an der Felge ein. Die Nut ist im einfachsten Fall in der Umfangsfläche ausgebildet. Wenn der Klemmring einteilig ausgebildet ist, ist er in Umfangsrichtung einmal unterbrochen und kann somit aufgespreizt werden, um mit der Nut in Eingriff zu kommen. Sobald der Klemmring montiert ist, kann das Felgenhorn axial nach außen verschoben werden und kommt mit dem Klemmring in Kontakt und zwar so, dass das Felgenhorn eine radiale Aufweitung des Klemmringes verhindert und diesen sogar mit einer gewissen Kraft in die Nut hineindrückt. Damit ist es praktisch nicht möglich, dass sich der Klemmring aus der Nut herausbewegt. Das Felgenhorn ist damit sicher auf der Umfangsfläche der Felge gehalten.

Vorzugsweise ist eine Trägeranordnung für ein Radlager in die Felge eingesetzt. Die Trägeranordnung ist also zunächst ein eigenes Bauteil, das mit der Felge verbunden wird. Da die Felge im Wesentlichen aus einem Kunststoff gebildet ist, erleichtert die Trägeranordnung die Montage eines Radlagers, das sich in dem Kunststoff selbst möglicherweise nicht so gut befestigen ließe.

Vorzugsweise weist die Trägeranordnung eine geteilte Lagerschale auf. Damit ist es beispielsweise möglich, von beiden axialen Enden her einen Teil der Lagerschale in die Felge einzubauen. Das Radlager kann dann an zwei axial voneinander beabstandeten Positionen in der Felge abgestützt werden, ohne dass eine durchgehende Lagerschale mit einer entsprechend großen Masse notwendig wäre.

Vorzugsweise ist die Trägeranordnung mit einer undehnbaren Schicht umwickelt. Wenn ein Radlager in die Trägeranordnung eingepresst wird, vermeidet man ein radiales Aufweiten der Trägeranordnung. Dies könnte dazu führen, dass sich das Radlager insgesamt in der Trägeranordnung dreht, was unerwünscht ist.

Auch ist von Vorteil, wenn die Trägeranordnung durch Formschluss undrehbar in der Felge gehalten ist. Der Formschluss kann auf unterschiedliche Arten erzeugt werden. So ist es beispielsweise möglich, die Trägeranordnung mit einer polygonartigen Außenkontur zu versehen. Eine andere Möglichkeit besteht darin, die Trägeranordnung mit Vorsprüngen oder Ausnehmungen zu versehen, so dass sich Speichen der Trägeranordnung oder des Kunststoffs bilden, die eine Drehung der Trägeranordnung in der Felge verhindern.

Auch ist von Vorteil, wenn die Felge einen Innenumfang aufweist, der zumindest teilweise mit einer Wärmestrahlungsreflexionsschicht versehen ist. Eine derartige Wärmestrahlungsreflexionsschicht ist vor allem dann von Vorteil, wenn in der Radnabe eine Bremse, vor allem eine Reibungsbremse angeordnet ist. Wenn eine derartige Bremse betätigt wird, dann erzeugt sie eine relativ große Wärmemenge. Die Wärmestrahlungsreflexionsschicht trägt dann dazu bei, die Auswirkungen der Wärmestrahlung auf die Felge kleinzuhalten, so dass der Kunststoff der Felge nicht übermäßig thermisch belastet wird.

Hierbei ist bevorzugt, dass die Wärmestrahlungsreflexionsschicht als Folie ausgebildet ist, die mit dem Innenumfang verklebt ist. Die Folie hat in radialer Richtung nur eine geringe Dicke, so dass Platzprobleme praktisch keine Rolle spielen. Die Folie kann beispielsweise ein Gemisch aus Aluminium und Aramid aufweisen.

Auch ist von Vorteil, wenn die Folie eine Isolierschicht aufweist. Eine Isolierschicht kann beispielsweise durch eine Gasschicht gebildet sein. Die Gasschicht kann durch einen Schaum gehalten sein.

Bevorzugterweise stehen Mitnehmer für eine Bremseinrichtung vom Innenumfang vor und die Wärmestrahlungsreflexionsschicht ist zwischen den Mitnehmern angeordnet. Dies erleichtert die Herstellung.

Die Erfindung wird im Folgenden anhand eines bevorzugten Ausführungsbeispiels in Verbindung mit der Zeichnung beschrieben. Hierin zeigen:
- Fig. 1: eine Radnabe in perspektivischer Darstellung, teilweise geschnitten,
- Fig. 2: eine Schnittansicht durch einen Teil der Radnabe,
- Fig. 3: einen Klemmring und
- Fig. 4: einen Teil einer Lagerschale.

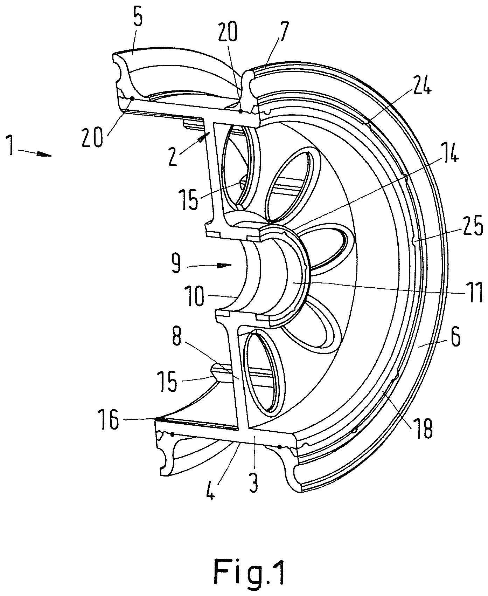

Fig. 1 zeigt eine Radnabe 1 in perspektivischer Darstellung, teilweise im Schnitt. Die Radnabe ist im vorliegenden Fall für ein Flugzeugrad vorgesehen. Ein Flugzeugrad sollte eine möglichst geringe Masse aufweisen.

Die Radnabe 1 weist eine Felge 2 auf, die im Wesentlichen aus einem faserverstärkten Kunststoff, insbesondere einem kohlefaserverstärkten Kunststoff gebildet ist. Die Felge 2 weist ein Felgenbett 3 mit einer Umfangsfläche 4 auf. Die Umfangsfläche 4 ist zylindermantelförmig ausgebildet und, bis auf einige wenige unten näher beschriebene Ausnahmen, glatt.

Auf die Umfangsfläche 4 sind axial von außen zwei Felgenhörner 5, 6 aufgeschoben. Dies ist möglich, weil die Umfangsfläche, wie oben ausgeführt, als Zylindermantelfläche ausgeführt ist.

Die Felgenhörner 5, 6 sind ebenfalls aus einem faserverstärkten Kunststoff gebildet, insbesondere einem kohlefaserverstärkten Kunststoff. Die Felgenhörner 5, 6 weisen zumindest an ihrem Außenumfang eine Laufschutzschicht 7 auf, die beispielsweise aus Aramid oder Para-Aramid gebildet sein kann. Damit erhält die Radnabe Notlaufeigenschaften, die für Flugzeugräder häufig gefordert werden. Sollte der (nicht näher dargestellte) Reifen beschädigt sein oder sogar ganz fehlen, dann kann das Flugzeug unmittelbar auf der Umfangsfläche der Felgenhörner 5, 6 rollen. Dies wird auch als "Roll-on-Rim" bezeichnet.

Das Felgenbett 3 steht über einen Felgenstern 8 mit einem Lagerbereich 9 in Verbindung. Im Lagerbereich 9 ist eine Trägeranordnung für ein nicht näher dargestelltes Radlager in die Felge 2 eingesetzt. Im vorliegenden Fall weist die Trägeranordnung zwei Teile 10, 11 einer Lagerschale auf. Die beiden Teile 10, 11 sind von beiden axialen Enden in den Lagerbereich 9 eingesetzt, so dass es möglich ist, ein Radlager an zwei axial voneinander beabstandeten Positionen in der Felge 2 abzustützen, ohne dass man eine durchgängige Lagerschale benötigt.

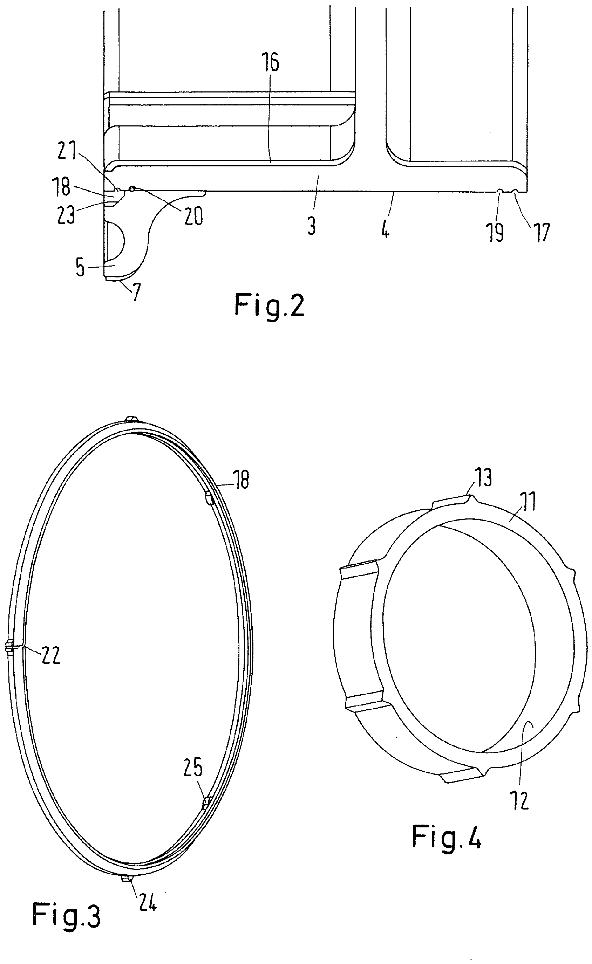

Fig. 4 zeigt den Teil 11 der Lagerschale. Der Teil 11 der Lagerschale weist einen glatten Innenumfang 12 auf, in den ein Lager eingepresst oder eingeschrumpft werden kann. Darüber hinaus weist der Teil 11 der Lagerschale radial nach außen vorstehende Vorsprünge 13 auf, die in den Kunststoff der Felge 2 eindringen und somit eine Verdrehsicherung für die Lagerschale bilden. Die Teile 10, 11 der Lagerschale können sich also nicht gegenüber der Felge 2 verdrehen. Die Vorsprünge 13 erzeugen einen Formschluss zur Felge 2. Dieser Formschluss kann auch auf andere Weise erzeugt werden, beispielsweise dann, wenn die Teile 10, 11 der Lagerschale einen polygonartigen Außenumfang haben oder auf andere Weise Drehmomentangriffsflächen erzeugt worden sind.

Um ein radiales Aufweiten der Teile 10, 11 der Lagerschale beim Einpressen eines Radlagers zu verhindern, sind die Teile 10, 11 von einer undehnbaren Schicht 14 umgeben. Diese undehnbare Schicht 14 kann beispielsweise dadurch gebildet sein, dass man Verstärkungsfasern, die praktisch undehnbar sind, beispielsweise Kohlefasern oder Glasfasern, mit einer ausreichenden Spannung um den Lagerbereich 9 herumwickelt.

Das Felgenbett 3 weist an seinem Innenumfang mehrere Mitnehmer 15 für eine Bremseinrichtung auf. Diese Mitnehmer stehen radial nach innen vom Innenumfang vor. Zwischen den Mitnehmern 15 ist eine Wärmestrahlungsreflexionsschicht 16 angeordnet. Die Wärmestrahlungsreflexionsschicht 16 ist als Folie ausgebildet, die mit dem Innenumfang der Felge 2 verklebt ist. Die Wärmestrahlungsreflexionsschicht 16 kann zusätzlich noch eine Isolierschicht aufweisen, die beispielsweise einen Schaum mit einer Vielzahl von Gasbläschen enthält. Die Wärmestrahlungsreflexionsschicht 16 sorgt dafür, dass eine von einer nicht näher dargestellten Bremseinrichtung erzeugte Wärmestrahlung keinen allzu negativen Effekt auf den Kunststoff der Felge 2 hat.

Wie insbesondere in Fig. 1 und 2 zu erkennen ist, weist die Umfangsfläche 4 des Felgenbetts 3 im Bereich eines jeden axialen Endes zwei umlaufende Nuten auf. Eine axial äußere Nut 17 ist zur Aufnahme eines Klemmrings 18 vorgesehen, der weiter unten erläutert wird. Eine axial weiter innen liegende Nut 19 ist vorgesehen, um eine Dichtung 20 aufzunehmen, die zwischen der Umfangsfläche 4 und der radialen Innenseite der Felgenhörner 5, 6 angeordnet ist und verhindert, dass ein Gas zwischen der Felge 2 und den Felgenhörnern 5, 6 entweichen kann.

Zur Montage der Felgenhörner 5, 6 auf der Umfangsfläche 4 des Felgenbetts 3 wird das Felgenhorn 5 in axialer Richtung auf die Umfangsfläche 4 aufgeschoben. Dies ist ohne weiteres möglich, weil die Umfangsfläche 4 einer Zylindermantelfläche entspricht. Dementsprechend ist eine Bewegung des Felgenhorns 5 auf der Felge 2 sowohl in axialer als auch in Umfangsrichtung möglich. Der Innenumfang der Felgenhörner 5, 6 ist allerdings an den Außenumfang der Umfangsfläche 4 so angepasst, dass eine radiale Bewegung praktisch nicht möglich ist, wenn man von einem für die Montage erforderlichen Spiel absieht.

Das Felgenhorn 5, 6 wird axial etwas weiter auf die Umfangsfläche 4 aufgeschoben, als es der späteren Endposition entspricht. Damit steht Raum zur Verfügung, um den Klemmring 18 auf die Oberfläche 4 aufzusetzen und in die Nut 17 eintreten zu lassen. Der Klemmring 18 weist zu diesem Zweck einen radial nach innen vorstehenden Vorsprung 21 auf.

Der Klemmring 18 ist in Umfangsrichtung geschlossen bis auf eine Unterbrechung 22. Er kann also aufgespreizt werden, damit der Vorsprung 21 in die Nut 17 eintreten kann. Er kann prinzipiell auch mehrteilig ausgebildet sein.

Sobald der Klemmring 18 mit der Nut 17 in Eingriff gekommen ist, bildet der Klemmring 18 eine Sicherung gegen eine Bewegung des Felgenhorns 5 axial nach außen. Das Felgenhorn 5, 6 weist eine Ausnehmung auf, die an die Form des Klemmrings 18 angepasst ist. Insbesondere weist das Felgenhorn 5, 6 eine Druckfläche 23 auf, mit der das Felgenhorn 5 auf den Klemmring 18 drückt und mit einer in die Nut 17 hineinwirkenden Kraftkomponente belastet, wenn das Felgenhorn 5 selbst mit einem Druck belastet wird, beispielsweise dann, wenn ein montierter Reifen unter Druck gesetzt wird.

In der in Fig. 2 für das Felgenhorn 5 dargestellten Montageposition kann sich der Klemmring 18 nicht mehr radial aufweiten, so dass er von der Nut 17 nicht frei kommen kann. Dementsprechend bildet der Klemmring 18 ein Verschlusselement, das formschlüssig mit der Felge 2 in Eingriff steht und das Felgenhorn 5 gegen eine Bewegung axial nach außen sichert. Eine Bewegung axial nach innen ist ohnehin nicht möglich, sobald der Reifen unter Druck gesetzt worden ist.

Wie man insbesondere in Fig. 3 erkennen kann, weist der Klemmring in Umfangsrichtung verteilt einige radial nach außen ragende Vorsprünge 24 und einige radial nach innen ragende Vorsprünge 25 auf. Die radial nach außen ragenden Vorsprünge 24 greifen in entsprechende Ausnehmungen am Felgenhorn 5, 6 ein. Die radial nach innen ragenden Vorsprünge 25 greifen in entsprechende Ausnehmungen am Felgenbett 3 ein. Um die Vorsprünge 24, 25 mit den entsprechenden Ausnehmungen an den Felgenhörnern 5, 6 und am Felgenbett 3 in Übereinstimmung bringen zu können, ist es gegebenenfalls erforderlich, bei der Montage die Felgenhörner 5, 6 etwas auf der Umfangsfläche 4 zu verdrehen. Der Klemmring 18 bildet mit Hilfe der Vorsprünge 24, 25 dann eine Verdrehsicherung der Felgenhörner 5, 6 gegenüber der Felge 2.

Die beiden Felgenhörner 5, 6 sind identisch aufgebaut. Man trifft also keine Unterscheidung zwischen "linkem" und "rechtem" Felgenhorn. Dies erleichtert die Ersatzteilbeschaffung und Vorratshaltung.

Die Radnabe ist außerordentlich wartungsfreundlich. Wenn eines der beiden Felgenhörner 5, 6 beschädigt ist, reicht es aus, das beschädigte Felgenhorn zu ersetzen, ohne dass es erforderlich ist, die komplette Radnabe zu ersetzen.

Bei der Montage eines Reifens kommt man im Grunde ohne Werkzeuge für das Lösen und Wiederbefestigen der Felgenhörner 5, 6 an der Felge 2 aus. Es ist lediglich erforderlich, eines der beiden Felgenhörner 5, 6 in Axialrichtung geringfügig nach innen zu verschieben, um den Klemmring 18 lösen und wieder montieren zu können. Danach muss das entsprechende Felgenhorn 5, 6 in axialer Richtung wieder nach außen geschoben werden, um gesichert zu sein.

## Patentansprüche

1. Radnabe (1), insbesondere Flugzeugradnabe, mit einer Felge (2), die eine Umfangsfläche (4) aufweist, und jeweils einem Felgenhorn (5, 6) an den axialen Enden der Felge (2), wobei die Felge (2) einen faserverstärkten Kunststoff als Hauptkomponente aufweist und jedes der Felgenhörner (5, 6) lösbar mit der Felge (2) verbunden ist, wobei mindestens ein Felgenhorn (5, 6) axial von außen auf die Umfangsfläche (4) aufgeschoben ist und durch ein Verschlusselement gegen eine Bewegung axial nach außen gesichert ist, und das Verschlusselement eine Verdrehsicherung zwischen der Felge (2) und dem Felgenhorn (5, 6) bildet, **dadurch gekennzeichnet, dass** das Verschlusselement als Klemmring (18) ausgebildet ist, der nach außen ragende Vorsprünge (24) und nach innen ragende Vorsprünge (25) aufweist, die in entsprechende Ausnehmungen am Felgenhorn (5, 6) bzw. Felgenbett (3) eingreifen, wobei der Klemmring (18) mit Hilfe der Vorsprünge (24, 25) eine Verdrehsicherung der Felgenhörner (5, 6) gegenüber der Felge (2) bildet.

2. Radnabe nach Anspruch 1, **dadurch gekennzeichnet, dass** mindestens ein Felgenhorn (5, 6) einen faserverstärkten Kunststoff als Hauptkomponente aufweist.

3. Radnabe nach Anspruch 1 oder 2, **dadurch gekennzeichnet, dass** das Felgenhorn (5, 6) mit einer Laufschutzschicht (7) versehen ist.

4. Radnabe nach einem der Ansprüche 1 bis 3, **dadurch gekennzeichnet, dass** der Klemmring (18) in eine Nut (17) an der Felge (2) eingreift und das Felgenhorn (5, 6) eine auf den Klemmring (18) wirkende Druckfläche (23) aufweist und den Klemmring (18) mit einer in die Nut (17) hineinwirkenden Kraftkomponente belastet.

5. Radnabe nach einem der Ansprüche 1 bis 4, **dadurch gekennzeichnet, dass** eine Trägeranordnung für ein Radlager in die Felge (2) eingesetzt ist.

6. Radnabe nach Anspruch 5, **dadurch gekennzeichnet, dass** die Trägeranordnung eine geteilte Lagerschale (10, 11) aufweist.

7. Radnabe nach Anspruch 5 oder 6, **dadurch gekennzeichnet, dass** die Trägeranordnung mit einer undehnbaren Schicht (14) umwickelt ist.

8. Radnabe nach einem der Ansprüche 5 bis 7, **dadurch gekennzeichnet, dass** die Trägeranordnung durch Formschluss undrehbar in der Felge (2) gehalten ist.

9. Radnabe nach einem der Ansprüche 1 bis 8, **dadurch gekennzeichnet, dass** die Felge (2) einen Innenumfang aufweist, der zumindest teilweise mit einer Wärmestrahlungsreflexionsschicht (16) versehen ist.

10. Radnabe nach Anspruch 9, **dadurch gekennzeichnet, dass** die Wärmestrahlungsreflexionsschicht (16) als Folie ausgebildet ist, die mit dem Innenumfang verklebt ist.

11. Radnabe nach Anspruch 10, **dadurch gekennzeichnet, dass** die Folie eine Isolierschicht aufweist.

12. Radnabe nach einem der Ansprüche 9 bis 11, **dadurch gekennzeichnet, dass** Mitnehmer (15) für eine Bremseinrichtung vom Innenumfang vorstehen und die Wärmestrahlungsreflexionsschicht (16) zwischen den Mitnehmern (15) angeordnet ist.

## Claims

1. A wheel hub (1), particularly an aircraft wheel hub, with a rim (2) that has a circumferential surface (4) and a respective rim flange (5, 6) on the axial ends of the rim (2), wherein the rim (2) comprises a fiber-reinforced plastic as its main component and each of the rim flanges (5, 6) is detachably connected to the rim (2), wherein at least one rim flange (5, 6) is axially pushed on the circumferential surface (4) from outside and secured against an axial motion in the outward direction by a closure element, and wherein the closure element forms an anti-rotation lock between the rim (2) and the rim flange (5, 6), **characterized in that** the closure element is realized in the form of a clamping ring (18), which comprises projections (24) that protrude outward and projections (25) that protrude inward, wherein said projections respectively engage into corresponding recesses on the rim flange (5, 6) and the rim base (3), and wherein the clamping ring (18) forms an anti-rotation lock of the rim flanges (5, 6) relative to the rim (2) with the aid of the projections (24, 25).

2. The wheel hub according to claim 1, **characterized in that** at least one rim flange (5, 6) comprises a fiber-reinforced plastic as its main component.

3. The wheel hub according to claim 1 or 2, **characterized in that** the rim flange (5, 6) is provided with a running protection layer (7).

4. The wheel hub according to one of claims 1 to 3, **characterized in that** the clamping ring (18) engages into a groove (17) on the rim (2), and **in that** the rim flange (5, 6) has a pressure surface (23) that acts upon the clamping ring (18) and subjects the clamping ring (18) to a force component acting into the groove (17) .

5. The wheel hub according to one of claims 1 to 4, **characterized in that** a carrier arrangement for a wheel bearing is inserted into the rim (2).

6. The wheel hub according to claim 5, **characterized in that** the carrier arrangement comprises a divided bearing shell (10, 11).

7. The wheel hub according to claim 5 or 6, **characterized in that** an inductile layer (14) is wrapped around the carrier arrangement.

8. The wheel hub according to one of claims 5 to 7, **characterized in that** the carrier arrangement is non-rotatably held in the rim (2) by means of a form fit.

9. The wheel hub according to one of claims 1 to 8, **characterized in that** the rim (2) has an inner circumference, which is at least partially provided with a heat radiation reflection layer (16).

10. The wheel hub according to claim 9, **characterized in that** the heat radiation reflection layer (16) is realized in the form of a foil, which is glued to the inner circumference.

11. The wheel hub according to claim 10, **characterized in that** the foil comprises an insulation layer.

12. The wheel hub according to one of claims 9 to 11, **characterized in that** drivers (15) for a brake device protrude from the inner circumference and the heat radiation reflection layer (16) is arranged between the drivers (15).

## Revendications

1. Moyeu de roue (1), notamment moyeu d'une roue d'avion, pourvu d'une jante (2), qui comporte une surface circonférentielle (4) et respectivement un rebord de jante (5, 6) sur les extrémités axiales de la jante (2), la jante (2) comportant comme composant principal une matière plastique renforcée par fibres et chacun des rebords de jante (5, 6) étant relié de manière amovible avec la jante (2), au moins un rebord de jante (5, 6) étant emboîté en direction axiale par l'extérieur sur la surface circonférentielle (4) et étant bloqué par un élément de fermeture contre un déplacement axial vers l'extérieur, et l'élément de fermeture formant un blocage anti-rotation entre la jante (2) et le rebord de jante (5, 6), **caractérisé en ce que** l'élément de fermeture est conçu sous la forme d'une bague de serrage (18) qui comporte des saillies (24) débordant vers l'extérieur et des saillies (25) débordant vers l'intérieur, qui s'engagent dans des évidements correspondants sur le rebord de jante (5, 6) ou sur la base de la jante (3), la bague de serrage (18) créant à l'aide des saillies (24, 25) un blocage anti-rotation des rebords de jante (5, 6) par rapport à la jante (2).

2. Moyeu de roue selon la revendication 1, **caractérisé en ce qu'**au moins un rebord de jante (5, 6) comporte comme composant principal une matière plastique renforcée par fibres.

3. Moyeu de roue selon la revendication 1 ou 2, **caractérisé en ce que** le rebord de jante (5, 6) est muni d'une couche de protection fonctionnelle (7).

4. Moyeu de roue selon l'une quelconque des revendications 1 à 3, **caractérisé en ce que** la bague de serrage (18) s'engage dans une rainure (17) sur la jante (2) et le rebord de jante (5, 6) comporte une surface de pression (23) agissant sur la bague de serrage (18) et contraint la bague de serrage (18) avec une composante de force agissant à l'intérieur de la rainure (17).

5. Moyeu de roue selon l'une quelconque des revendications 1 à 4, **caractérisé en ce qu'**un agencement de support pour un palier de roue est inséré dans la jante (2).

6. Moyeu de roue selon la revendication 5, **caractérisé en ce que** l'agencement de support comporte un coussinet de palier (10, 11) divisé.

7. Moyeu de roue selon la revendication 5 ou 6, **caractérisé en ce que** l'agencement de support est enveloppé d'une couche (14) inextensible.

8. Moyeu de roue selon l'une quelconque des revendications 5 à 7, **caractérisé en ce que** l'agencement de support est maintenu de manière non rotative par complémentarité de forme dans la jante (2) .

9. Moyeu de roue selon l'une quelconque des revendications 1 à 8, **caractérisé en ce que** la jante (2) comporte une circonférence intérieure qui est munie au moins en partie d'une couche de réflexion des rayonnements thermiques (16).

10. Moyeu de roue selon la revendication 9, **caractérisé en ce que** la couche de réflexion des rayonnements thermiques (16) est conçue sous la forme d'un film, qui est collé sur la circonférence intérieure.

11. Moyeu de roue selon la revendication 10, **caractérisé en ce que** le film comporte une couche isolante.

12. Moyeu de roue selon l'une quelconque des revendications 9 à 11, caractérisé en ce des entraîneurs (15) destinés à un système de freinage débordent de la circonférence intérieure et la couche de réflexion des rayonnements thermiques (16) est placée entre les entraîneurs (15).
